# EUROPEAN PATENT APPLICATION

(11) **EP 0 968 784 A2**
(43) Date of publication of application: **05.01.2000**
(21) Application number: 99202018.0
(22) Date of filing: 23.06.1999
(51) Int. Cl.: B23B 31/12

(54) **Button-supporting head with adjustable grip**

(30) Priority: 29.06.1998 IT MI981486
(71) Applicant: Tullio Giusi S.p.A., 24064 Grumello del Monte (Bergamo) (IT)
(72) Inventor: Giusi, Giuseppe, 25036 Palazzolo sull'Oglio (Brescia) (IT)
(74) Representative: Faraggiana, Vittorio, Dr. Ing.

(57) **Abstract**

A supporting head, intended for use in button-working machines, comprises clamps (111, 211) with movable jaws (113, 213) for controlled gripping and releasing of buttons. Each clamp (111, 211) comprises a closing and opening mechanism formed of an outer crown (114, 214) and an inner disc (115, 215) coaxially rotating about an axis (116, 216). The jaws (113, 213) are pivotally mounted about the crown (114, 214) and mesh with the disc. On the relative rotation of the crown and disc about the axis (116, 216) in either way the jaws rotate in clockwise and counter-clockwise directions for moving away from or close to the clamp centre and therefore opening or closing the clamp.

## Description

The present invention relates to a button-gripping head in a working machine.

Machines for working buttons are known that comprise revolving heads or turrets at the sides of which powered clamps grip buttons. The clamped buttons are sequentially put in front of working tools surrounding the turret.

A problem in the known art is to have clamps exercising a correct clamping force, tightly holding the button, so that working efforts can be applied thereto without however damaging it, while at the same time being susceptible of adaptation to buttons of different diameters. In order to achieve this result, heads having replaceable clamps for the different button diameters are employed. These heads are expensive and in addition the machine is subjected to long downtimes for replacement.

It is a general aim of the present invention to obviate the above mentioned drawbacks by providing a grip head which is relatively cheap and not very bulky, capable of offering a satisfactory clamping and susceptible of adjustment for receiving buttons of different diameters.

In view of the above aim, in accordance with the invention, a supporting head has been devised which is intended for use in machines for button working, comprising clamps with a plurality of movable jaws for controlled gripping and releasing of buttons, characterized in that each clamp comprises a closing and opening mechanism formed of an outer crown and an inner disc coaxially rotating about an axis, each jaw being pivotally mounted around the crown and being kinematically connected to the disc, so that on the relative rotation of the crown and disc about the axis in either way, the jaws rotate clockwise or counterclockwise around their pivoting axis, so that the jaws move away from and close to the clamp centre.

For better explaining the innovative principles of the present invention and the advantages it offers over the known art, a possible embodiment of the invention applying these principles will be given hereinafter by way of non-limiting example, with the aid of the accompanying drawings. In the drawings:
- Fig. 1 is an elevation side view of a first embodiment of a head in accordance with the invention;
- Fig. 2 is a sectional view taken along line II-II in Fig. 4;
- Fig. 3 is a diagrammatic view of the grip jaws of the head shown in Fig. 1;
- Fig. 4 is a sectional view of the head taken along line IV-IV in Fig. 1;
- Fig. 5 is a sectional view of the head taken along line V-V in Fig. 6;
- Fig. 6 is a sectional view taken along line VI-VI in Fig. 4;
- Fig. 7 is a diagrammatic and partial plan view of a head in accordance with the invention during a button machining step;
- Fig. 8 is an elevation side view, taken along line VIII-VIII in Fig. 9 of a second embodiment of a head in accordance with the invention;
- Fig. 9 is a sectional plan view taken along line IX-IX in Fig. 8;
- Figs 10 and 11 are diagrammatic front views of the grip jaws of the head shown in Fig. 8 during clamping of a button of great diameter and of small diameter.

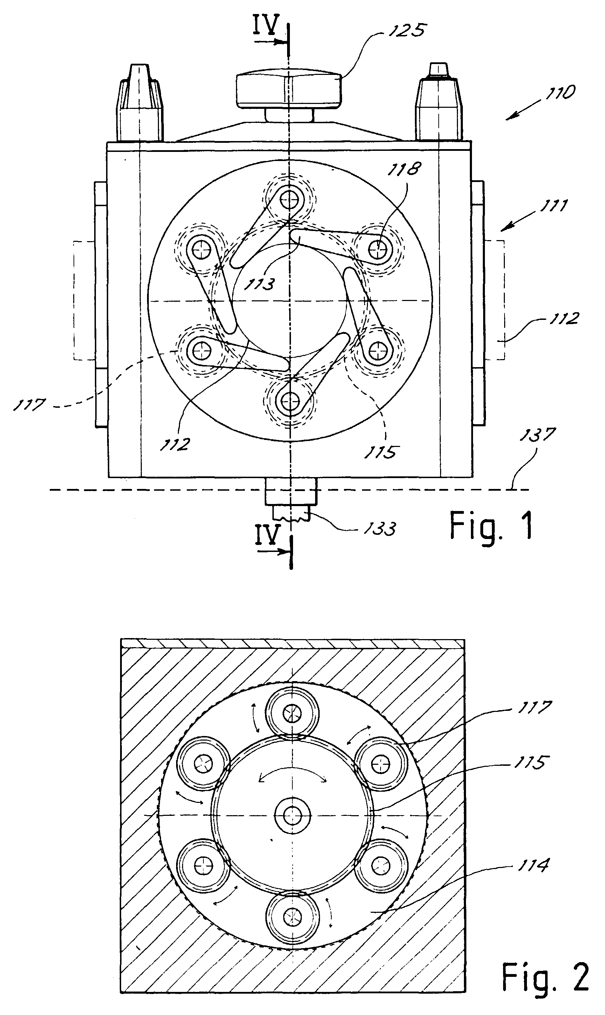

With reference to the drawings, a head, generally denoted by 110 is shown in Fig. 1, which head is adapted for mounting on a machine 137 for button working. The machine is not shown herein, as it can be of any known type and therefore can be easily conceived by a person skilled in the art.

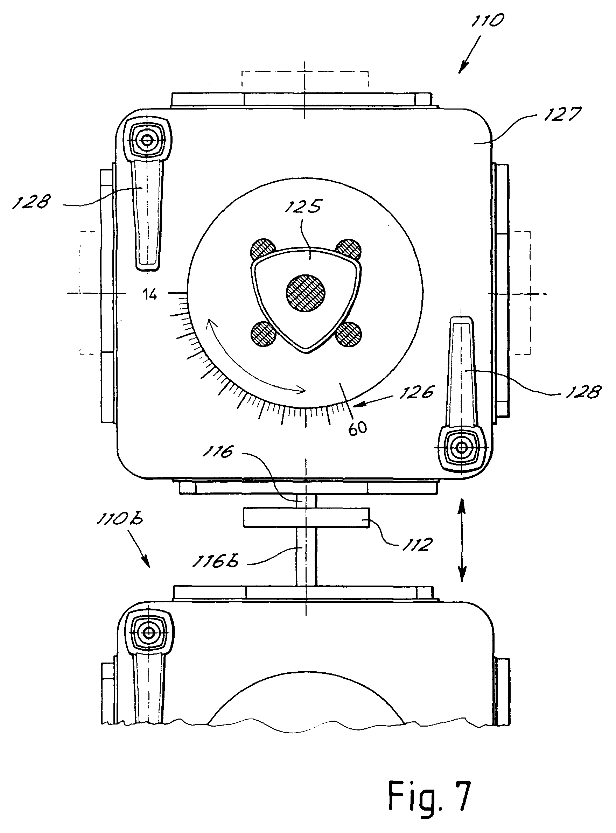

As can be also viewed from Fig. 7, the head 110 has a rectangular plan, with a clamp 111 on each side for peripheral gripping of a button 112, so that the working surface thereof is turned outwardly of the head. Usually, the head is intended for being mounted on a known mechanism of the machine adapted to rotate it about its vertical axis, so that the faces thereof supporting the buttons are presented in succession to working tools.

For button gripping, each clamp comprises jaws 113 that are movable towards each other upon command.

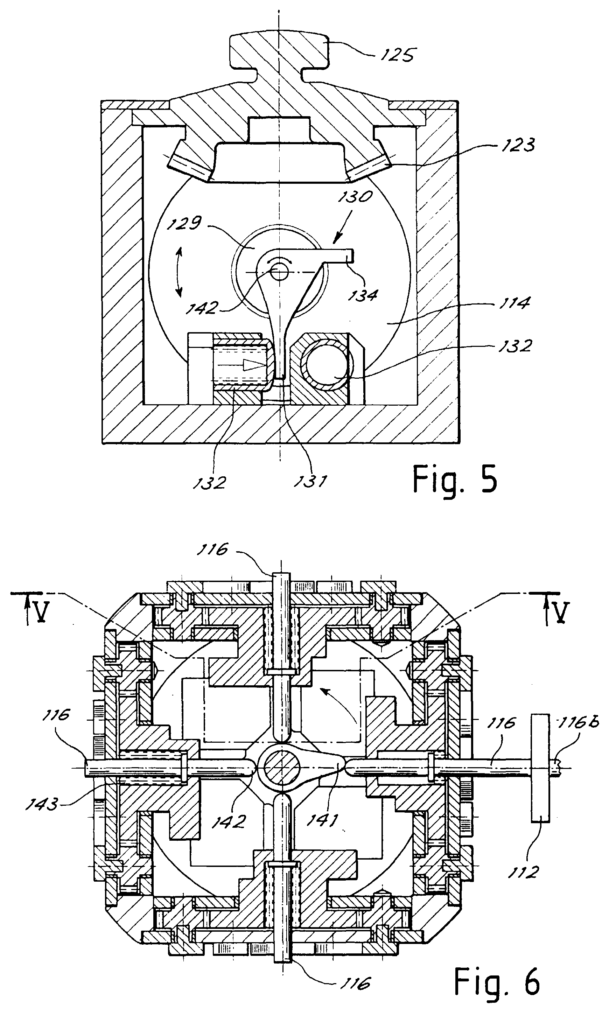

As clearly shown in Fig. 4 as well, for movement of the jaws each clamp comprises a circular crown element 114 and a toothed disc 115 rotating thereinto, both coaxial and with their axis coincident with the central axis 116 of the clamp. Each jaw made in the form of an elongated finger, is supported by a gear 117 pivotally mounted to the crown 114 and meshing with the peripheral toothing of disc 115. In this way, each jaw is pivotally mounted on crown 114 and kinematically connected to the inner disc 115. The gears are disposed spaced apart the same distance around the circular crown 114.

As clearly shown in Fig. 1, the assembly formed of crown 114, disc 115 and gears 117 uniformly disposed around the central axis of the clamp, embodies a kinematic mechanism for symmetric movement of the clamp jaws, so that, on relative rotation of crown 114 and disc 115, jaws move and rotate about axes 118 of gears 117.

The ends of fingers 113 turned towards the clamp axis thus identify points forming a button-clamping circumference.

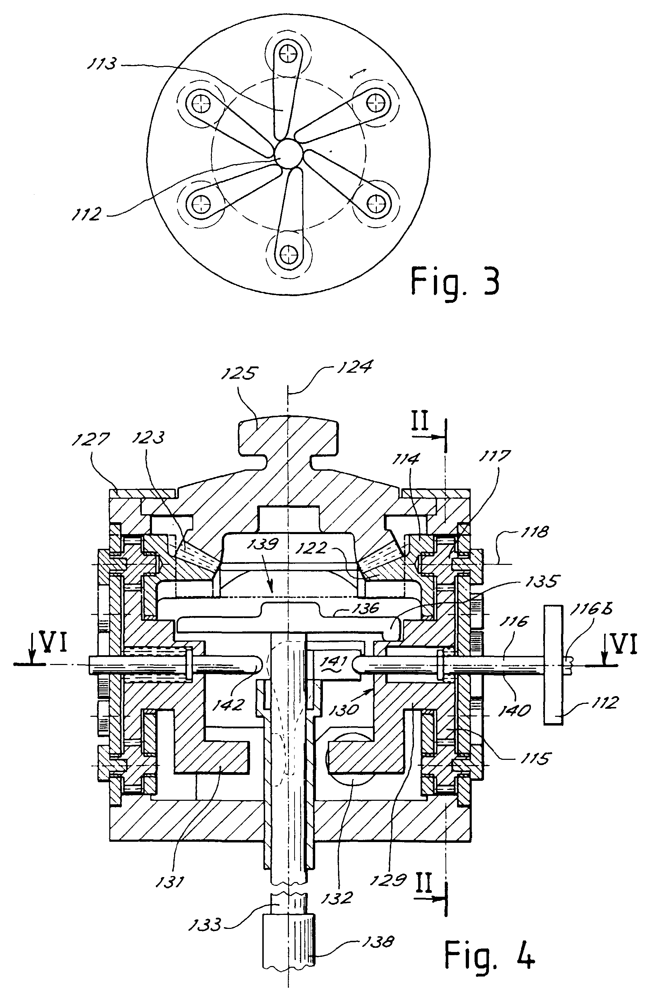

Shown in Fig. 1 is clamping of a button of large diameter, whereas in Fig. 3 clamping of a button of minimum diameter is shown. The high number of equidistant contact points between the clamp and button makes holding very tight, without on the other hand damaging the button edge.

Therefore the clamps in accordance with the invention are also adapted to clamp buttons to be submitted to very vigorous working.

The head comprises first means 125 for relative rotation of the crown 114 and disc 115 for a maximum movement of the jaws and second means 133 for relative rotation of the crown 114 and disc 115 for a minimum movement of the jaws.

The first movement means is advantageously manually adjustable, whereas the second movement means is powered for operation by the control device of the machine at appropriate moments of the work cycle.

As clearly shown in Fig. 4, for accomplishing the first movement means, inside the head the crown 114 of each clamp supports a bevel cogwheel 122. The tour bevel wheels 122 mesh with an upper bevel cogwheel 123 rotating about its own vertical axis 124 by means of a knob 125 projecting from the upper face of the head. In this way, on rotation of knob 125 all clamps of the head simultaneously move between a position of maximum opening (shown in Fig. 1) and a position of maximum closure (shown in Fig. 3).

Knob 125 can be advantageously associated with a graduated scale 126 so that an immediate visual checking is provided during adjustment.

In order to avoid undesired movements of the knob (and consequently of the clamps), releasable locking means is provided which is formed of a cover 127 and gripping handles 128 clamping a peripheral edge of the body of the cogwheel element 123.

As shown in Figs. 4 and 5, for accomplishing the second movement means each central disc 115 has a rear shank 129 axially passing through the cogwheel of the respective crown 114 and projecting towards axis 124. Each shank 129 supports a drive element 130, comprising a first lever 131 pushed by spring means 132 for axially rotating the shank in the clamp closing direction. The rotation angle of element 130 is limited, so that its movement gives rise to said limited opening or closing movement of the clamp. The spring means 132 is selected to give a correct clamping force during the short stroke of lever 131. It may for example consist of an air spring, a helical spring, etc.

The drive element 130 also has a second, generally horizontal, lever 134 which is acted upon by a clamp-opening device 139. The device can be provided for selectively acting on the clamps, based on the angular position of the head, so that only the clamps that are in the button loading and unloading positions are opened.

A clamp-opening device that has been found particularly advantageous comprises an operation plate 136 which is one for all clamps and is movable downwardly by a drive rod 133 projecting downwardly of the head, in alignment with the rotation axis of the latter, and is connected to an actuator 138 for controlled axial movement of same. The plate at the lower part thereof comprises projections 135 that can possibly be adjustable in height and are intended for bearing on levers 134.

By operating actuator 138, the rod causes lowering of plate 136 which, acting against levers 134, causes rotation of the clamp discs 115 against the action of the respective springs. The plate is lowered by a lower amount than the height of projections 135, so that on movement of the plate only the clamps having lever 134 in register with a projection 135 are opened.

Typically, projections 135 will be at least two, at the loading and unloading positions of the buttons. Rod 133 and the plate do not rotate together with the head, so that only the clamps gradually reaching the preestablished loading and unloading positions will be operated.

Advantageously, each clamp is provided with a central pusher 140 to ensure ejection of the button when the clamp opens to release a button contained therein.

Pushers are operated by a cam surface or radial projection 141, arranged to act on the pusher tail 142. Springs 143 keep the pushers to a retracted position when they are not operated by the cam. Cam 141 can be operated by the same central drive rod 133 for the clamps or by a separated drive mechanism (not shown). In the figures, and in particular in Fig. 7, passage of a button 112 from head 110 to an identical head 110b by means of pushers 116 and 116b is shown.

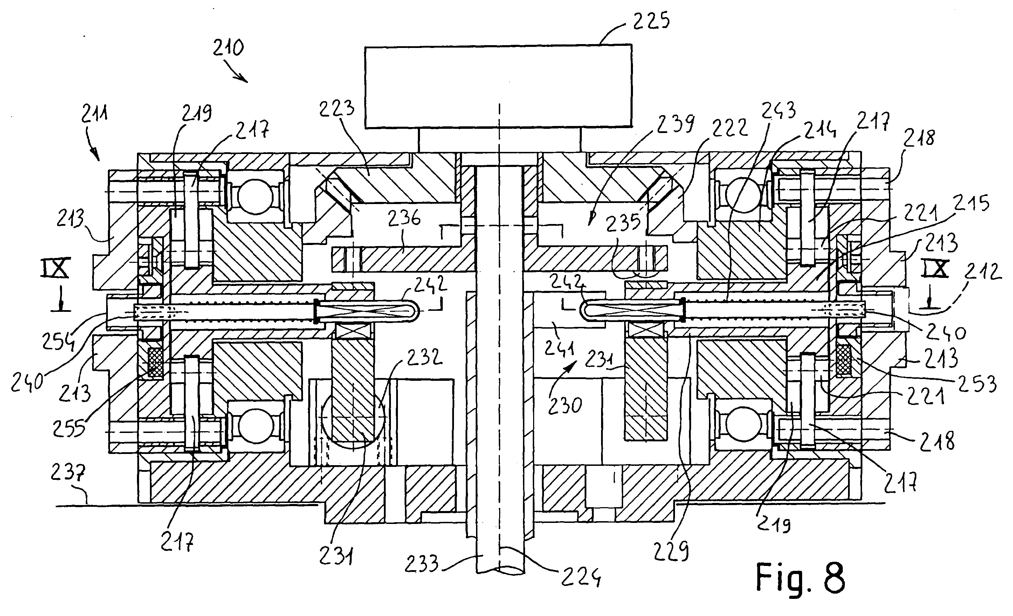

Shown in Fig. 8 is a second embodiment of a head, generally identified by 210, which is adapted for mounting on a machine 237 for button working. The machine is not herein shown, as it can be of any known type and therefore can be easily conceived by a person skilled in the art.

For the sake of convenience, elements similar to those of the preceding embodiment will be identified by the same reference numerals increased by 100.

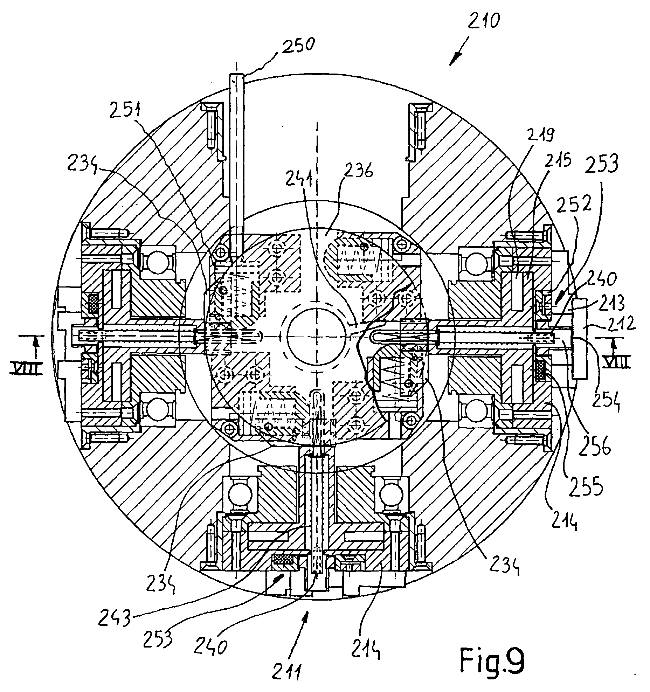

As also shown in Fig. 9, head 210 has a clamp 211 on each side for peripheral gripping of a button 212, in such a manner that the working surface is turned outwardly of the head. For button gripping, each clamp comprises jaws 213 movable upon command.

As clearly shown in Fig. 8, for jaw movement each clamp comprises a circular crown element 214 (supported by bearings) and a cam disc 215 rotating therein, both coaxial and the axis of which is coincident with the central axis 216 of the clamp. Each jaw, made in the form of an elongated finger, is pivotally mounted on crown 214 by means of a pin 218. For kinematically connecting the jaw to the inner disc 215, pin 218 is integral with the jaw and integrally carries a lever 217, disposed in a seating of crown 214 for fitting, by a free end 221 thereof, into a respective recess or elongated groove 219 of disc 215.

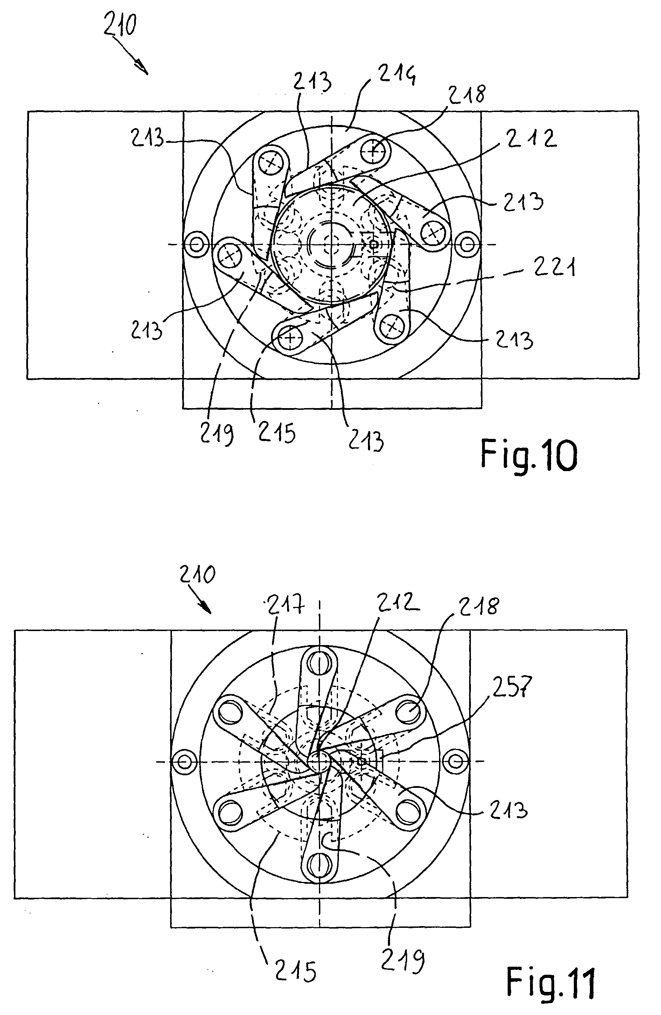

As clearly shown in Fig. 10, the assembly formed of crown 214, disc 215 and levers 217 creates a kinematic cam mechanism for the symmetric movement of the clamp jaws so that, on relative rotation of the crown 214 and disc 215, jaws move and rotate about the axes of pins 218, due to thrust exerted by grooves 219 on the respective free ends 221 of levers 217.

The ends of fingers 213 turned towards the axis of the clamp thus identify points forming a button-clamping circumference. Shown in Fig. 10 is gripping of a button of wide diameter whereas gripping of a button of minimum diameter is shown in Fig. 11.

Advantageously, in the case of workings tending to impart a rotation torque to the button, clamps can be disposed turned in the opposite direction relative to the rotation direction. For example, in Figs. 10 and 11 clamps are directed so as to provide a self-locking effect on an attempt of the button to rotate clockwise.

For the relative movement of the crown 214 and disc 215, provision is made for the presence of first means 225 for relative rotation of crown 214 and disc 215 for a maximum movement of the jaws and second means 233 for relative rotation of crown 214 and disc 215 for a minimum movement of the jaws.

The first movement means is advantageously manually adjustable, whereas the second movement means is powered for operation by the control device of the machine during the appropriate movements of the work cycle.

As clearly shown in Fig. 8, for accomplishing the first movement means, inside the head the crown 214 of each clamp supports a bevel cogwheel 222. The four bevel wheels 222 mesh with an upper bevel cogwheel 223 rotating about its own vertical axis 224 by means of a knob 225 projecting from the upper face of the head. In this way, on rotation of knob 225 all clamps of the head simultaneously move between a position of maximum opening (shown in Fig. 10) and a position of maximum closure (shown in Fig. 11).

Knob 225 can be advantageously associated with a graduated scale so that an immediate visual checking is provided during adjustment.

As shown in Figs. 8 and 9, for accomplishment of the second movement means each central disc 215 has a rear shank 229 axially passing through the cogwheel of the respective crown 214 and projecting towards axis 224. Each shank 229 supports a drive element 230, comprising a first lever 231 pushed by spring means 232 for axially rotating the shank in the clamp closing direction. The rotation angle of element 230 is limited, so that its movement gives rise to said limited opening or closing movement of the clamp. The spring means 232 is selected to give a correct clamping force during the short stroke of lever 231. It may for example consist of an air spring, a helical spring, etc.

The drive element 230 also has a second, generally horizontal, lever 234 which is acted upon by a clamp-opening device 239. The device can be provided for selectively acting on the clamps, based on the angular position of the head, so that only the clamps that are in the button loading and unloading positions are opened.

A clamp-opening device that has been found particularly advantageous comprises an operation plate 236 which is one for all clamps and is movable downwardly by a drive rod 233 projecting downwardly of the head, in alignment with the rotation axis of the latter, and is connected to an actuator (not shown) for its controlled axial sliding. The plate at the lower part thereof comprises projections 235 that can possibly be adjusted in height and are intended for bearing on levers 234. Projections 235 can consist of inserts or threaded screws received in holes in the plate.

By causing lowering of the rod, plate 236 acts, where projections 235 are present, against levers 234, causing rotation of the clamp discs 215 against the action of the respective springs.

The plate is lowered by a lower amount than the height of projections 235, so that on movement of the plate only the clamps having lever 234 in register with a projection 235 are opened.

Typically, projections 235 will be at least two, at the loading and unloading positions of the buttons. Rod 233 and the plate do not rotate together with the head, so that only the clamps gradually reaching the preestablished loading and unloading positions will be operated.

Advantageously, each clamp is provided with a central pusher 240 to ensure ejection of the button when the clamp opens to release a button contained therein.

Pushers are operated by a cam surface or radial projection 241, arranged to act on the pusher tail 242. Springs 243 keep the pushers to a retracted position when they are not operated by the cam. Can 241 can be operated by the same central drive rod 233 for the clamps or by a separated drive mechanism (not shown).

As clearly shown in Figs. 8 and 9, each clamp is centrally provided with a recess 252 for housing a small centre portion 253 defining a rest surface 254 for the button. The rest surface has an adjustable position to enable a predetermined sinking of the button into the clamp.

Generally, this will enable the button to keep its front surface slightly projecting from the clamp, so that the jaws will not interfere with working.

Advantageously, the small centre portion is maintained in place by a magnet 255 (the clamp body is of ferromagnetic material), so that a quick change is enabled. A radial nib 257 (Fig. 11) radially projects from the small centre portion and fits into a respective seating in the clamp body for preventing radial rotation of the small centre portion.

Still advantageously, the rest surface 254 is formed on an insert 256 screwed down in the body of the small centre portion, so as to enable an easy fine adjustment. For wider variations, the insert or the whole small centre portion can be replaced.

At this point it is apparent that the intended aims have been achieved.

A head in accordance with the invention is of easy construction, while at the same time giving an excellent grip. Due to the use of rotating fingers, a precise and tight grip is obtained irrespective of the button diameter. In addition, by virtue of the first manual clamp-adjustment means, operated by knob 125, 225, the base position of the jaws between a maximum position and a minimum position can be adjusted, so as to adapt it to a button of a particular diameter. Adjustment can be easily carried out by putting the button in any clamp and rotating the knob until the jaws tightly grip the button.

After adjustment, by driving actuator 138 or rod 233 the clamp opening means is operated for a movement of small extent around the adjusted base position which is sufficient for button release or accommodation, without useless wide movements. In addition, since compression of the spring means 132, 232 for clamp closure is independent of the adjustment of the manual adjustment means, the clamping force of the jaws against the button is constant and well established, irrespective of the button diameter.

The clamping force can be easily adjusted in an independent manner for each clamp, by acting on the compressive action of the respective spring 132, 232. In Fig. 9 one of the clamp assemblies has been removed for showing the underlying threaded adjustment rod 250 acting on a plate 251 for varying compression of the thrust spring 232 depending on a greater or lower screwing. The rod can be advantageously reached from the outside for easy adjustment. Alternatively, threaded rods 250 of different length can be provided and they can be changed depending on requirements, each of them giving the spring a predetermined compression.

Obviously, the above description of an embodiment applying the innovative principles of the present invention is given by way of example only and therefore must not be considered as a limitation of the scope of the invention as herein claimed. For example, the conformation and sizes of the head and jaws, as well as the number of clamps, can vary depending on specific requirements. In addition, the means for adjusting the base position of the jaws can act on the inner disc and the opening and closure control means can act on the crown, instead of acting in the opposite manner. Finally, while the operation element 215 has been identified as "a disc", it can have a shape different from a true disc, also depending on the number of necessary grooves. For example, it can have the shape of a so-called "Maltese cross".

## Claims

1. A supporting head intended for use in machines for button working, comprising clamps (111, 211) with a plurality of movable jaws (113, 213) for controlled gripping and releasing of buttons, characterized in that each clamp (111, 211) comprises a closing and opening mechanism formed of an outer crown (114, 214) and an inner disc (115, 215) coaxially rotating about an axis (116, 216), each jaw being pivotally mounted around the crown and being kinematically connected to the disc (115, 215), so that on the relative rotation of the crown and disc about the axis (116, 216) in either way, the jaws rotate clockwise or counterclockwise around their pivoting axis, so that the jaws move away from and close to the clamp centre.

2. A head as claimed in claim 1, characterized in that for carrying out the kinematic connection of the jaws (113) to the disc (115), the disc has a toothed conformation, and gears (117) are pivotally mounted about the crown for meshing with the disc (115) toothing, the gears (117) carrying the jaws (113) in such a manner that they radially project therefrom, so that on relative rotation of the crown and disc the corresponding rotation of the jaws occur.

3. A head as claimed in claim 1, characterized in that for carrying out the kinematic connection of the jaws (213) to the disc (215), each jaw (213) is pivotally mounted in an integral manner on an operation lever (217), each lever having its free end (221) fitted in elongated grooves (219) present in the disc (215), so that on relative rotation of the crown and disc the corresponding rotation of the jaws occur.

4. A head as claimed in claim 1, characterized in that it comprises first means (114, 214, 115, 215, 117, 217, 122, 222, 123, 223, 125, 225) for adjusting opening of the jaws in a base position included between a position of maximum opening and a position of minimum opening and second means (114, 214, 115, 215, 117, 217, 132, 232, 133, 233) for controlling an opening and closing movement of the clamps about the adjusted base position.

5. A head as claimed in claim 4, characterized in that the first means for adjusting the base position and the second means for controlling the opening and closing movement of the clamps act on the mutual angular position of the crown and the disc about said axis, respectively.

6. A head as claimed in claim 5, characterized in that the first means for adjusting the base position comprises a cogwheel (122, 222) integral with the crown, meshing with a rotation pinion (123, 223) which is driven by a manual-adjustment knob (125, 225).

7. A head as claimed in claim 5, characterized in that the second means controlling the opening and closing movement of the clamps comprises spring means (132, 232) for rotation of the disc about the clamp axis (116, 216) in the closing direction of the clamp and driven means (133, 233) for rotation of the disc about the clamp axis in the opening direction of the clamp.

8. A head as claimed in claim 7, characterized in that the second control means comprises an axial shank (129, 229) projecting at the rear from the disc inwardly of the head and integrally carrying a radially extending first lever (131, 231) and a radially extending second lever (134, 234), the first lever being pushed by the spring means (132, 232) and the second lever by the driven means (133, 233).

9. A head as claimed in claim 8, characterized in that there is a plurality of clamps and they are such disposed that they laterally face the head in a direction normal to a controlled-rotation axis (124, 224) of the head.

10. A head as claimed in claim 9, characterized in that the pinion (123, 223) and knob (125, 225) for adjusting the base position of the clamps are only one for all clamps and disposed with their rotation axis substantially coincident with the rotation axis (124, 224) of the head.

11. A head as claimed in claim 9, characterized in that the driven means selectively acts on clamps being part of said plurality.

12. A head as claimed in claim 11, characterized in that the driven means comprises a slidable powered rod (133, 233) disposed axially of the rotation axis (124, 224) of the head, on the rod being engaged a plate (136, 236) for exerting a thrust action on said second levers (134, 234) for movement of the clamps towards the open position, the plate having projections (135, 235) for a selective thrust action on the second levers, so that only the clamps at a predetermined angular position around the plate axis are opened.

13. A head as claimed in claim 1, characterized in that a pusher (140, 240) is provided centrally of each clamp and it is movable upon command in a direction normal to the clamp for pushing a button present in the clamp, out of said clamp.

14. A head as claimed in claim 13, characterized in that the pusher-moving actuator comprises a cam (141, 241) rotating relative to the head for a selective action against the tail end of a pusher (140, 240).

15. A head as claimed in claim 1, characterized in that the jaws are disposed with an inclined extension relative to the radial direction of the button and directed in the opposite way relative to that of rotation forces applied to the button during working.

16. A head as claimed in claim 7, characterized in that the spring means (232) exerts a thrust action which is adjustable externally of the head.

17. A head as claimed in claim 16, characterized in that the spring means comprises springs (232) and the thrust action is adjusted by varying the spring compression by means of rods (250) screwed down from the outside of the head.

18. A head as claimed in claim 1, characterized in that each clamp centrally comprises a removable small centre portion (253) defining a rest surface (254) for the rear face of the button.

19. A head as claimed in claim 18, characterized in that the rest surface (254) is made up of an insert (256) screwed down in an adjustable manner in the small centre portion.

20. A head as claimed in claim 18, characterized in that the small centre portion is received in a matching seating (252) in the clamp and is maintained removably steady in place by a magnet (255).
